# EUROPÄISCHE PATENTANMELDUNG

(11) **EP 1 513 189 A1**
(43) Veröffentlichungstag der Anmeldung: **09.03.2005**
(21) Anmeldenummer: 04019865.7
(22) Anmeldetag: 20.08.2004
(51) Int. Cl.: H01K 1/32, F21V 7/22

(54) **Infrarotreflektor und Infrarotstrahler mit einem derartigen Infrarotreflektor**

(30) Priorität: 05.09.2003 DE 10341503
(71) Anmelder: Patent-Treuhand-Gesellschaft für elektrische Glühlampen mbH, 81543 München (DE)
(72) Erfinder: Schmidt, Hans-Joachim, Dr., 85049 Ingolstadt (DE)

(57) **Zusammenfassung**

Die Erfindung betrifft einen Reflektor für Infrarotstrahlen, dessen reflektierende Oberfläche (61) erfindungsgemäß aus Kupfer besteht. Außerdem betrifft die Erfindung einen Infrarotstrahler mit einer Halogenglühlampe (1) als Strahlungsquelle und einem Reflektor (6) mit einer reflektierenden Oberfläche (61) aus Kupfer.

## Beschreibung

Die Erfindung betrifft einen Reflektor für Infrarotstrahlen gemäß des Oberbgeriffs des Patentanspruchs 1 und einen Infrarotstrahler mit einem derartigen Reflektor.

### I. Stand der Technik

Die Offenlegungsschrift EP 1 072 841 A2 beschreibt einen Infrarotstrahler mit einer Glühlampe als Strahlungsquelle und einem parabolischen Reflektor, der lichtdurchlässig ausgebildet ist und die Infrarotstrahlung in die gewünschte Richtung reflektiert. Die Reflektoröffnung ist mittels einer lichtundurchlässigen Filterscheibe abgedeckt.

### II. Darstellung der Erfindung

Es ist die Aufgabe der Erfindung, einen Reflektor für Infrarotstrahlung sowie einen Infrarotstrahler mit einem möglichst einfachen Aufbau bereitzustellen.

Diese Aufgabe wird erfindungsgemäß durch die Merkmale des Patentanspruchs 1 bzw. 2 gelöst. Besonders vorteilhafte Ausführungen der Erfindung sind in den abhängigen Patentansprüchen beschrieben.

Die Infrarotstrahlen reflektierende Oberfläche besteht erfindungsgemäß aus Kupfer. Dadurch besitzt der erfindungsgemäße Reflektor für Strahlung oberhalb einer Wellenlänge von 700 nm einen Reflexionsgrad von mehr als 90%. Im Wellenlängenbereich von 800 nm bis 1500 nm beträgt der Reflexionsgrad sogar mehr als 95% der auf die Oberfläche auftreffenden Strahlung. Der erfindungsgemäße Reflektor besitzt daher in dem Wellenlängenbereich von 700 nm bis 1500 nm ein genau so gutes Reflexionsvermögen wie bekannte Goldreflektoren, ist aber erheblich kostengünstiger als ein mit Gold beschichteter Reflektor. Besonders vorteilhaft lässt sich der erfindungsgemäße Reflektor in Kombination mit einer Halogenglühlampe verwenden, da die Halogenglühlampe den größten ihrer Energie in Form von Infrarotstrahlung oberhalb einer Wellenlänge von ca. 780 nm abgibt.

Der erfindungsgemäße Infrarotstrahler besitzt eine Haolgenglühlampe als Strahlungsquelle und einen Reflektor mit einer aus Kupfer bestehenden, Infrarotstrahlen reflektierenden Oberfläche. Wie bereits oben erläutert wurde, ergibt die Kombination einer Halogenglühlampe mit einem Reflektor, dessen reflektierende Oberfläche aus Kupfer besteht, in dem Wellenlängenbereich von 700 nm bis 1500 nm einen besonders effizienten und kostengünstigen Infarotstrahler, da die Halogenglühlampe den größten ihrer Energie in Form von Infrarotstrahlung mit Wellenlängen oberhalb von 780 nm abstrahlt und die Kupferoberfläche des Reflektors im Wellenlängenbereich voin 800 nm bis 1500 nm einen sehr hohen Reflexionsgrad von mehr als 95% der auftreffenden Strahlung besitzt. Um das von der Halogenglühlampe emittierte Licht zu unterdrücken, ist das Lampengefäß in vorteilhafter Weise mit einer lichtreflektierenden, für Infrarotstrahlen transparenten Beschichtung versehen. Alternativ oder zusätzlich kann zu demselben Zweck die Reflektoröffnung mit einer lichtundurchlässigen, für Infrarotstrahlen transparenten Abdeckung abgedeckt sein. Der Reflektor ist gemäß des bevorzugten Ausführungsbeispiels als schalenförmiger Glasreflektor ausgebildet, dessen Innenseite mit einer Kupferschicht versehen ist.

### III. Beschreibung des bevorzugten Ausführungsbeispiels

Nachstehend wird die Erfindung anhand eines bevorzugten Ausführungsbeispiels näher erläutert. Es zeigen:
- Figur 1: Eine teilweise geschnittene Seitenansicht eines Infrarotstrahlers gemäß des bevorzugten Ausführungsbeispiels der Erfindung

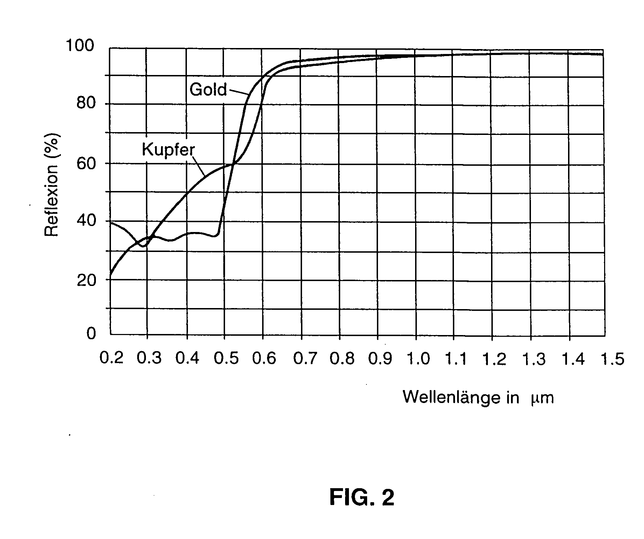

- Figur 2: Den Reflexionsgrad der Kupferschicht des Reflektors des Infrarotstrahlers aus Figur 1 in Abhängigkeit von der Wellenlänge im Vergleich zu einer Goldschicht

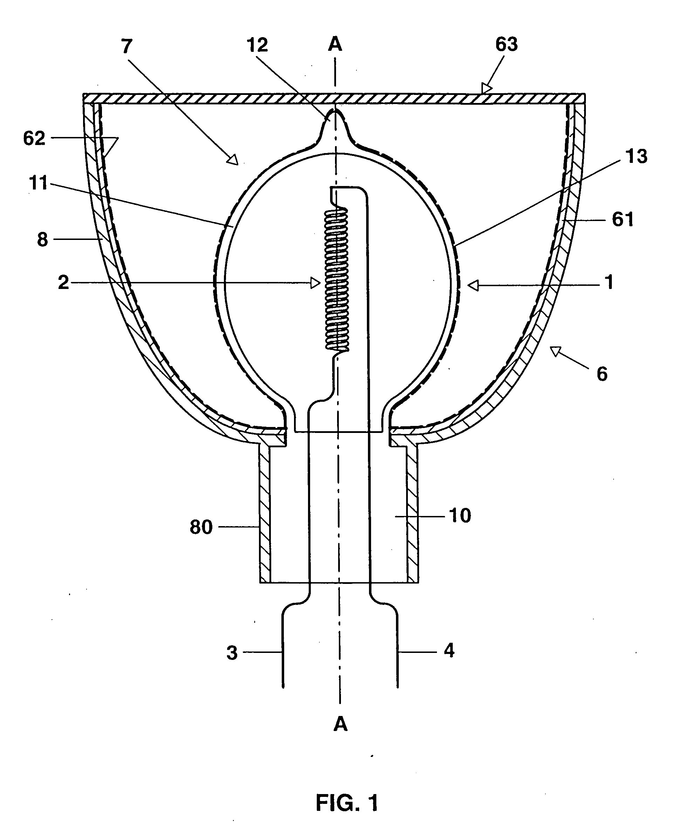

Der in Figur 1 abgebildete Infrarotstrahler besitzt als Strahlungsquelle eine Halogenglühlampe 1 mit einer elektrischen Leistungsaufnahme von ungefähr 50 Watt. Sie besitzt ein einseitig abgedichtetes Lampengefäß aus Quarzglas. Im Innenraum des Lampengefäßes ist eine Glühwendel 2 aus Wolfram angeordnet, die mittels zweier aus dem abgedichteten Ende 10 des Lampengefäßes herausragender Stromzuführungen 3, 4 mit elektrischer Energie versorgt wird. Der die Glühwendel 2 umschließende Bereich 11 des Lampengefäßes ist mit einem als Kaltlichtspiegel ausgebildeten Interferenzfilter 13 beschichtet, das für Infrarotstrahlung transparent ist und das von der Glühwendel 2 generierte Licht zur Wendelaufheizung in das Lampengefäß zurückreflektiert. Das Interferenzfilter 13 erstreckt sich auch über die Kuppe 12 des Lampengefäßes.

Der Reflektor 6 ist als parabolischer Glasreflektor mit einem Grundkörper 8 aus Glas ausgebildet, dessen Innenseite eine Infrarotstrahlen reflektierende Kupferschicht 61 trägt. Auf der Kupferschicht 61 ist ferner eine für Licht und Infrarotsrahlen transparente Lackschicht 62 aufgebracht, die als Korrosionsschutz dient. Die Reflektoröffnung ist durch eine lichtundurchlässige, für Infrarotstrahlen transparente Abdeckscheibe 63 verschlossen. Das abgedichtete Ende 10 des Lampengefäßes der Halogenglühlampe 1 ist in dem Reflektorhals 80 fixiert.

## Patentansprüche

1. Reflektor mit einer Infrarotstrahlen reflektierenden Oberfläche (61), **dadurch gekennzeichnet, dass** diese Oberfläche (61) aus Kupfer besteht.

2. Infrarotstrahler mit einer Halogenglühlampe (1) als Strahlungsquelle und einem Reflektor (6), **dadurch gekennzeichnet, dass** der Reflektor (6) eine Infrarotstrahlen reflektierende Oberfläche (61) aus Kupfer besitzt.

3. Infrarotstrahler nach Anspruch 2, **dadurch gekennzeichnet, dass** die Reflektoröffnung mit einer lichtundurchlässigen Abdeckung (63) versehen ist.

4. Infrarotstrahler nach Anspruch 2 oder 3, **dadurch gekennzeichnet, dass** der Reflektor (6) ein schalenförmiger Glasreflektor ist, dessen Innenseite mit einer Kupferschicht (61) versehen ist.

5. Infrarotstrahler nach Anspruch 2, **dadurch gekennzeichnet, dass** das Lampengefäß (11) der Halogenglühlampe (1) mit einer lichtreflektierenden und für Infrarotstrahlung transparenten Beschichtung (13) versehen ist.
